# FASCICULE DE BREVET EUROPEEN

(11) **EP 4 594 087 B1**
(45) Date de publication et mention de la délivrance du brevet: **18.11.2026**
(21) Numéro de dépôt: 23790717.5
(22) Date de dépôt: 18.09.2023
(51) Int. Cl.: B29C 70/48, B29D 99/00, B29C 33/02, B29C 35/02, B29C 70/86, B29C 35/16

(54) **OUTILLAGE ET PROCEDE DE FABRICATION D'UNE AUBE EN MATERIAU COMPOSITE POUR UNE TURBOMACHINE D'AERONEF**
WERKZEUG UND VERFAHREN ZUR HERSTELLUNG EINER VERBUNDSCHAUFEL FÜR EINE TURBOMACHINE
TOOLING AND METHOD FOR MANUFACTURING A COMPOSITE BLADE FOR A TURBOMACHINE

(30) Priorité: 26.09.2022 FR 2209717
(43) Date de publication de la demande: 06.08.2025
(73) Titulaire: SAFRAN AIRCRAFT ENGINES, 75015 Paris (FR)
(72) Inventeur: BLAISE, Maxime Marie Désiré, 77550 MOISSY-CRAMAYEL (FR); DROZ, Nicolas, 77550 MOISSY-CRAMAYEL (FR); BOSSAN, Pierre-Antoine, 77550 MOISSY-CRAMAYEL (FR)
(74) Mandataire: Gevers & Orès
(86) Numéro de dépôt international: PCT/FR2023/051417
(87) Numéro de publication internationale: WO 2024/069077

(56) Documents cités:
- EP-A2- 2 353 830

## Description

### Domaine technique de l'invention

La présente invention concerne un outillage et un procédé de fabrication d'une aube en matériau composite pour une turbomachine d'aéronef.

### Arrière-plan technique

L'état de la technique comprend notamment les documents FR-A1-2 956 057, FR-A1-3 029 134, FR-A1-3 051 386 et EP-A2-2 353 830, qui divulgue le préambule de la revendication 1.

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding*.

Il s'agit d'un procédé de réalisation d'une pièce en matériau composite à base de fibres imprégnées de résine. Un tel procédé est par exemple utilisé pour fabriquer une aube de soufflante et comporte plusieurs étapes successives.

On commence par réaliser le tissage de fibres pour obtenir une ébauche de préforme en trois dimensions, puis on découpe l'ébauche pour obtenir une préforme présentant sensiblement la forme de l'aube à obtenir. Cette préforme est alors disposée dans un outillage qui comporte un moule et un contre-moule. L'outillage est fermé puis on injecte de la résine à l'état liquide en maintenant une pression sur la résine injectée pendant que l'on effectue la polymérisation de la pièce par chauffage de l'outillage.

Les résines utilisées sont des résines très fluides qui sont à même de bien pénétrer les fibres de la préforme, même lorsqu'elles sont injectées sous une pression réduite. Pendant la polymérisation, sous l'effet de la chaleur, la résine injectée passe successivement de l'état liquide à l'état gélifié et enfin à l'état solide.

Pour la fabrication d'une aube, par exemple de soufflante de turbomachine, une préforme est réalisée par tissage en trois dimensions puis est imprégnée avec la résine afin de former une pale. Cette pale comporte un intrados et un extrados qui s'étendent depuis un bord d'attaque jusqu'à un bord de fuite de la pale.

Le matériau composite de la pale est relativement fragile, et en particulier sensible aux chocs, et il est connu de le protéger au moyen d'un bouclier métallique qui est rapporté et fixé sur le bord d'attaque de la pale.

Le bouclier peut être fixé à la pale de plusieurs façons. Une première façon consiste à coller le bouclier sur la pale, après polymérisation de la résine. La colle se présente alors sous forme d'une pâte ou d'un film.

Dans la technique actuelle, l'appairage des boucliers sur les bords des aubes est une étape clé et contraignante de la gamme de fabrication. En effet, les boucliers sont des pièces très complexes et peuvent varier de l'un à l'autre en fonction des fabricants et des tolérances de fabrication et peuvent ainsi avoir des particularités géométriques différentes.

Il est donc nécessaire, avant d'appairer et de coller un bouclier sur le bord d'une aube, de s'assurer que les dimensions et formes du bouclier sont bien conformes à celles de l'aube de façon à optimiser la surface de collage et donc la santé matière de la pièce une fois collée (épaisseur de colle, taux de porosité, etc.).

S'affranchir de l'étape de collage et l'intégrer directement à l'étape d'injection permet donc de conformer directement la géométrie de l'interface de collage à la géométrie du bord de l'aube en tout point et donc de supprimer l'étape de recherche du couple optimum bouclier / bord de l'aube. Ceci permet également d'éviter toute opération de préparation de surface de l'aube avant collage. Enfin, cela permet de s'affranchir de passage supplémentaire dans un équipement de traitement thermique (four, autoclave, etc.).

On a déjà proposé une autre façon de fixer un bouclier sur une pale, qui consiste à fixer le bouclier par co-moulage avec la préforme fibreuse. De la colle est disposée entre le bouclier et la préforme et l'ensemble est disposé dans l'outillage. La résine injectée imprègne la préforme et une étape de cuisson et de mise en pression permet d'assurer la polymérisation et le durcissement de la colle et de la résine.

Le cycle de cuisson doit être adapté pour prendre en compte les propriétés physiques et les conditions de mise en œuvre de la colle mais aussi de la résine. Cette contrainte oblige donc à la mise au point d'un procédé complexe et difficilement industrialisable. Un compromis thermique doit être trouvé pour garantir la robustesse du procédé au niveau physico-chimique et les performances mécaniques de l'assemblage final.

En ce qui concerne la colle par exemple, il est important de :
- ne pas dégrader la rhéologie afin d'assurer un mouillage sur les surfaces à coller,
- assurer que la viscosité soit relativement élevée avant application d'une pression dans l'outillage, et
- ne pas prématurément vieillir la colle à température pour garantir les propriétés mécaniques finales du joint de colle.

En ce qui concerne la résine, il est important de :
- assurer une viscosité faible pour remplir l'empreinte de l'outillage et imprégner la préforme, et donc assurer une température suffisante de l'outillage, et
- assurer que le taux d'avancement de la polymérisation soit le plus faible possible avant application de la pression dans l'outillage.

La présente invention propose un perfectionnement à la technique actuelle qui permet d'apporter une solution à au moins une partie des problèmes évoqués ci-dessus.

### Résumé de l'invention

L'invention propose un outillage pour la fabrication d'une aube en matériau composite pour une turbomachine, en particulier d'aéronef, cette aube comportant une pale comportant un intrados et un extrados qui s'étendent depuis un bord d'attaque jusqu'à un bord de fuite de la pale, l'aube comportant également un pied et un bord supérieur opposé à son pied, l'aube comportant en outre au moins un bouclier métallique s'étendant le long d'au moins un des dits bords de la pale, l'outillage comprenant :
- un moule et un contre-moule qui définissent entre eux une empreinte configurée pour recevoir une préforme tissée de la pale, l'empreinte comportant une première partie configurée pour recevoir le bouclier et le ou les bords de la préforme destiné(s) à recevoir ce bouclier, et une seconde partie configurée pour recevoir au moins une partie du reste de la préforme,
- au moins un port d'injection de résine dans l'empreinte afin d'imprégner ladite préforme, et
- des éléments de gestion de la température de l'empreinte,
caractérisé en ce que les éléments de gestion de la température comprennent des premiers éléments de gestion de la température de la première partie de l'empreinte, et des seconds éléments de gestion de la température de la seconde partie de l'empreinte qui sont indépendants des premiers éléments de gestion de la température de façon à ce que les premiers et seconds éléments de gestion puissent chauffer les première et seconde parties de l'empreinte à des températures différentes pendant au moins une étape d'un procédé de fabrication de l'aube.

L'outillage selon l'invention comprend ainsi des éléments de gestion de la température qui sont indépendants et configurés pour mettre en température respectivement les première et seconde parties de l'empreinte. On comprend dès lors que la température de la partie de l'empreinte comportant le ou les bords et la colle peut être adaptée pour faciliter la diffusion de la résine dans la préforme tout en évitant un vieillissement accéléré de la colle, et la température de l'autre partie de l'empreinte peut être adaptée pour faciliter la diffusion de la résine tout en optimisant les conditions pour la polymérisation de cette résine.

Dans la présente demande, on entend par la « gestion » de la température un chauffage et/ou un refroidissement. Les organes sont donc aptes à assurer un chauffage de l'outillage et de l'empreinte et/ou un refroidissement de l'outillage et de l'empreinte. A titre d'exemple, les premiers organes de gestion sont des organes de chauffage et/ou de refroidissement, et les seconds organes de gestion sont des organes de chauffage.

L'outillage selon l'invention peut comprendre une ou plusieurs des caractéristiques suivantes, prises isolément les unes des autres ou en combinaison les unes avec les autres :
- les seconds éléments de gestion de la température sont des éléments de chauffage qui sont configurés pour chauffer l'outillage jusqu'à une température prédéterminée, notée T1 ;
- les premiers éléments de gestion de la température sont des éléments de chauffage qui sont configurés pour chauffer l'outillage jusqu'à une température prédéterminée, notée T1, lors d'une étape d'un procédé de fabrication, et jusqu'à une autre température prédéterminée, notée T2 et inférieure à T1, lors d'une autre étape du procédé de fabrication ;
- les premiers éléments de gestion de la température sont des éléments de refroidissement et chauffage qui sont configurés pour chauffer l'outillage jusqu'à une température prédéterminée, notée T1, lors d'une étape d'un procédé de fabrication, et pour refroidir l'outillage jusqu'à une température prédéterminée, notée T2 et inférieure à T1, lors d'une autre étape du procédé de fabrication ;
- l'empreinte comporte une partie intermédiaire, située entre les première et seconde parties, les éléments de gestion de la température étant configurés pour créer une zone de transition progressive de la température au niveau de cette partie intermédiaire ;
- les éléments de gestion de la température sont du type à résistance chauffante, à induction ou à circulation d'un fluide caloporteur ;
- les éléments de gestion de la température sont répartis dans le moule et le contre-moule ; et
- les éléments de gestion de la température sont intégrés dans le moule et le contre-moule ; les premiers éléments de gestion de la température peuvent être agencés au niveau de la première partie de l'empreinte, et les seconds éléments de gestion de la température peuvent être agencés au niveau de la seconde partie de l'empreinte.

L'invention propose également un procédé de fabrication d'une aube en matériau composite pour une turbomachine, en particulier d'aéronef, cette aube comportant une pale comportant un intrados et un extrados qui s'étendent depuis un bord d'attaque jusqu'à un bord de fuite de la pale, l'aube comportant également un pied et un bord supérieur opposé à son pied, l'aube comportant en outre au moins un bouclier métallique s'étendant le long d'au moins un desdits bords de la pale, le procédé utilisant un outillage tel que décrit précédemment et comprenant les étapes consistant à :
a) disposer un bouclier et une préforme réalisée par tissage de fibres dans l'empreinte de l'outillage, une colle polymérisable étant intercalée entre le bouclier et le ou les bords de la préforme destiné(s) à recevoir le bouclier, le bouclier et le ou les bords de la préforme étant positionnés dans la première partie de l'empreinte, et le reste de la préforme étant positionné dans la seconde partie de l'empreinte,
b) fermer l'outillage, et
c) gérer la température de l'outillage et injecter de la résine polymérisable dans l'empreinte de l'outillage afin qu'elle imprègne la préforme de façon à former la pale après solidification,
caractérisé en ce que l'étape c) comprend :
c1) une première sous étape d'injection de la résine pendant laquelle la seconde partie de l'empreinte est chauffée jusqu'à une température prédéterminée, notée T1, et la première partie de l'empreinte est gérée pour ne pas dépasser une température prédéterminée, notée T2 qui est inférieure à T1, et
c2) une seconde sous étape de cuisson pendant laquelle les première et seconde parties sont chauffées à la température T1.

Le procédé selon l'invention peut comprendre une ou plusieurs des étapes ou caractéristiques suivantes, prises isolément les unes des autres ou en combinaison les unes avec les autres :
- à la sous étape c1), la première partie de l'empreinte est chauffée jusqu'à la température prédéterminée T2 ; on comprend donc que cette première partie passe d'une température inférieure à T2 à la température T2, par chauffage ;
- à la sous étape c1), la première partie de l'empreinte est refroidie pour ne pas dépasser la température prédéterminée T2 ; on comprend donc que cette première partie a tendance à chauffer au-delà de T2 et est refroidie pour ne pas dépasser cette température ;
- la température T1 est supérieure ou égale à 160°C, et de préférence supérieure ou égale à 180°C, et la température T2 est comprise entre 80 et 140°C, et de préférence entre 100 et 130°C ;
- le tissage de la préforme est réalisé en deux dimensions ou en trois dimensions.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une aube composite de turbomachine d'aéronef,
[Fig.2] la figure 2 est un schéma bloc montrant des étapes d'un procédé selon l'invention de fabrication d'une aube telle que celle représentée à la figure 1,
[Fig.3] la figure 3 est une vue schématique en perspective d'un moule dans lequel sont destinés à être disposés une préforme et un bouclier, et dans lequel est destinée à être injectée une résine,
[Fig.4] la figure 4 est un graphe représentant l'évolution de la température d'un outillage de fabrication d'une aube selon la figure 1 au cours du temps, et illustre deux cycles de chauffage,
[Fig.5] la figure 5 est une vue schématique en coupe d'un outillage selon un mode de réalisation de l'invention ;
[Fig.6] la figure 6 est une vue schématique en coupe d'un outillage selon une variante de réalisation de l'invention ; et
[Fig.7] la figure 7 est un graphe représentant l'évolution de la température d'un outillage de fabrication d'une aube selon la figure 1 au cours du temps, et illustre un procédé de fabrication selon l'invention.

### Description détaillée de l'invention

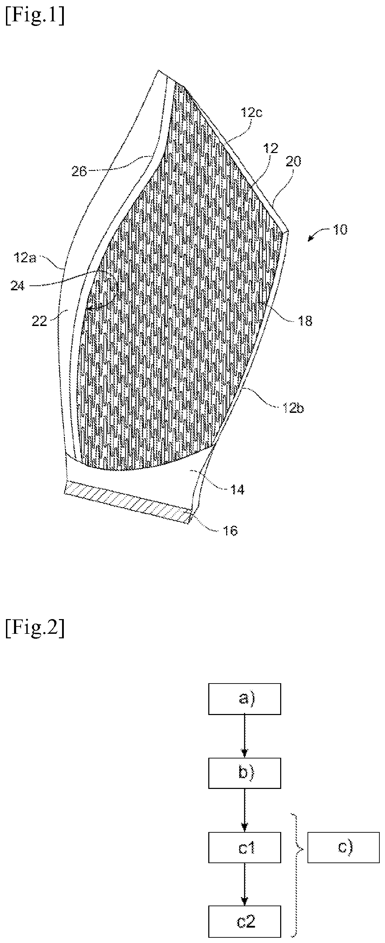

On se réfère d'abord à la figure 1 qui illustre une aube 10 en matériau composite pour une turbomachine, cette aube 10 étant par exemple une aube de soufflante ou de redresseur d'un flux secondaire dans le cas d'un turboréacteur à double flux.

L'aube 10 comprend une pale 12 reliée par une échasse 14 à un pied 16 qui a par exemple une forme en queue d'aronde et est conformé pour être engagé dans une alvéole de forme complémentaire d'un disque de rotor, afin de retenir l'aube sur ce disque.

La pale 12 comprend un bord d'attaque 12a et un bord de fuite 12b des gaz qui s'écoulent dans la turbomachine. La pale 12 a un profil aérodynamique incurvé voire vrillé et comprend un intrados 18 et un extrados 20 s'étendant entre les bords d'attaque 12a et de fuite 12b. La pale 12 comprend en outre un bord supérieur 12c opposé au pied 16.

La pale 12 est réalisée à partir d'une préforme fibreuse obtenue par tissage de fibres, par exemple en carbone. Le tissage peut être réalisé en deux dimensions et préférentiellement en trois dimensions.

Le bord d'attaque 12a de la pale est renforcé et protégé par un bouclier métallique 22 qui est fixé sur ce bord d'attaque 12a. Le bouclier 22 est par exemple en alliage à base de nickel et cobalt, en titane, en inox, etc.

La description qui suit concerne la fixation d'un bouclier 22 sur un bord d'attaque 12a. Par analogie, on peut comprendre que le bouclier 22 ou un autre bouclier pourrait être fixé sur le bord de fuite 12b. On peut également comprendre que le bouclier 22 ou un autre bouclier pourrait être fixé sur le bord supérieur 12c. Par ailleurs, le bouclier prévu par exemple sur le bord de fuite 12b pourrait s'étendre jusqu'au bord supérieur 12c par exemple, ou bien les boucliers des bords de fuite 12b et supérieur 12c pourraient être formés d'une seule pièce. Plusieurs variantes sont donc envisageables en ce qui concerne le nombre et la position d'un bouclier au sens de l'invention même si la description qui suit est faite en relation avec un bouclier situé sur le bord d'attaque 12a de la pale 12.

Dans la présente invention, la fixation du bouclier 22 est réalisée d'une part par co-moulage de la préforme avec le bouclier 22, et d'autre part par collage du bouclier 22 au moyen d'une colle 26.

La figure 2 est un organigramme qui illustre des étapes d'un procédé de fabrication d'une aube composite 10 telle que celle représentée à la figure 1.

Le procédé comprend des étapes a), b) et c).

La première étape a) du procédé comprend la réalisation d'une préforme fibreuse par tissage de fibres, de préférence en trois dimensions, grâce à une machine de tissage du type Jacquard par exemple. La préforme obtenue est brute et peut subir des opérations telles qu'une découpe, une mise en forme ou une compression par exemple.

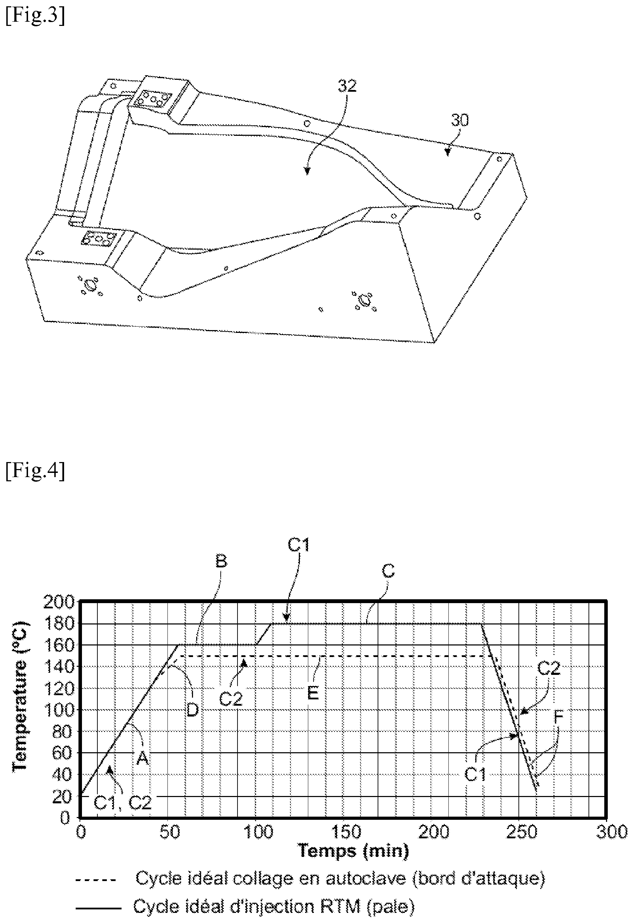

La première étape a) comprend également le dépôt de colle 26 entre le bouclier 22 et le bord 12a de la préforme 24 puis la disposition de l'ensemble ainsi obtenu dans un moule 30 de fabrication de l'aube, qui est représenté à la figure 3. La colle 26 peut être appliquée à l'aide d'un pinceau ou par l'intermédiaire d'un spray par exemple. En variante, elle peut se présenter sous la forme d'une patte. De manière préférée, la colle se présente sous la forme d'un film adhésif (tel qu'un tissu préimprégné par exemple) qui est découpé à la forme souhaitée puis déposé sur le bord d'attaque par l'opérateur avant l'appairage du bouclier sur le bord d'attaque.

La colle 26 est de préférence une colle en film composée d'un support tressé imprégné avec une résine thermodurcissable à base époxy, par exemple commercialisée par 3M^{®}, Hexcel^{®}, ou Solvay^{®}.

Le bouclier 22 a en général une forme de dièdre et définit une rainure à section en V dans lequel est inséré un bord de la préforme 24. La colle 26 peut être déposée dans la rainure du bouclier 22 et/ou sur le bord de la préforme 24.

La préforme 24 équipée de la colle 26 et du bouclier 22 est alors disposée dans le moule 30 (figure 3). Ce moule 30 fait partie d'un outillage qui comprend également un contre-moule (non représenté). Le moule 30 et le contre-moule ont des formes complémentaires et définissent entre eux une empreinte 32 de réception de la préforme 24 et du bouclier 22. Une partie ou une moitié de l'empreinte 32, destinée par exemple à former l'intrados 18 de la pale 12, est formée dans le moule 30, et l'autre partie ou moitié de l'empreinte 32, destinée par exemple à former l'extrados 20 de la pale 12, est formée dans le contre-moule.

Lors d'une étape b), l'outillage est fermé en rapportant le contre-moule sur le moule 30 et en les maintenant serré l'un sur l'autre en particulier pour garantir une étanchéité de l'empreinte 32.

Le procédé comprend ensuite une étape c) de gestion de la température de l'outillage et d'injection de la résine polymérisable dans l'empreinte de l'outillage afin qu'elle imprègne la préforme 24 de façon à former la pale après solidification.

La gestion et en particulier le chauffage de l'outillage sont est réalisée par des éléments de gestion de la température. Ces éléments de gestion peuvent faire partie d'une étuve ou d'un autoclave et/ou peuvent être directement intégrés dans le moule et/ou le contre-moule de l'outillage.

La résine injectée dans l'outillage est destinée à imprégner la préforme 24 et à venir au contact de la colle 26 du bouclier 22. Après polymérisation et durcissement de la résine, le bouclier 22 est solidarisé à la pale 12 par l'intermédiaire de la colle 26 et de la résine.

L'aube 10 ainsi obtenue, après polymérisation de la résine, est avantageuse dans la mesure où son bouclier 22 est parfaitement positionné et maintenu sur la pale 12.

La résine est par exemple une résine thermodurcissable à base époxy, à base de polyimide ou à base de bis-maléimides. Ces résines se trouvent dans le commerce. La colle 26 et la résine sont donc dans deux matériaux distincts qui ont des propriétés physico-chimiques et notamment rhéologiques différentes qui dépendent de la température.

La figure 4 est un graphe représentant deux cycles de chauffage différents de l'outillage. Le cycle de chauffage C2 montre le cycle « idéal » pour avoir un bon comportement de la colle 26 et un collage optimisé du bouclier 22 sur le bord d'attaque 12a. Le cycle de chauffage C1 montre le cycle « idéal » pour avoir une injection et une diffusion optimales de la résine dans l'empreinte 32 de l'outillage. On constate que les cycles C1, C2 comprennent chacun une première partie A de montée en température qui est similaire (partie gauche en pente des cycles C1, C2), ainsi qu'une dernière partie F de baisse de température qui est également similaire (partie droite en pente des cycles C1, C2). Les cycles C1, C2 comportent toutefois des paliers B, C, E de maintien en température qui sont différents. Le cycle C1 comprend un premier palier B à 160°C suivi d'un second palier C à 180°C, alors que le cycle C2 comprend un palier D à 150°C qui est atteint après une partie préalable D (juste après la première partie A) de montée en température avec une vitesse de chauffage plus faible.

On constate dès lors qu'il serait préférable d'optimiser le chauffage de l'outillage pour tenir compte des comportements physico-chimiques différents de la colle 26 et de la résine. C'est ce que propose la présente invention avec un outillage permettant d'atteindre cet objectif.

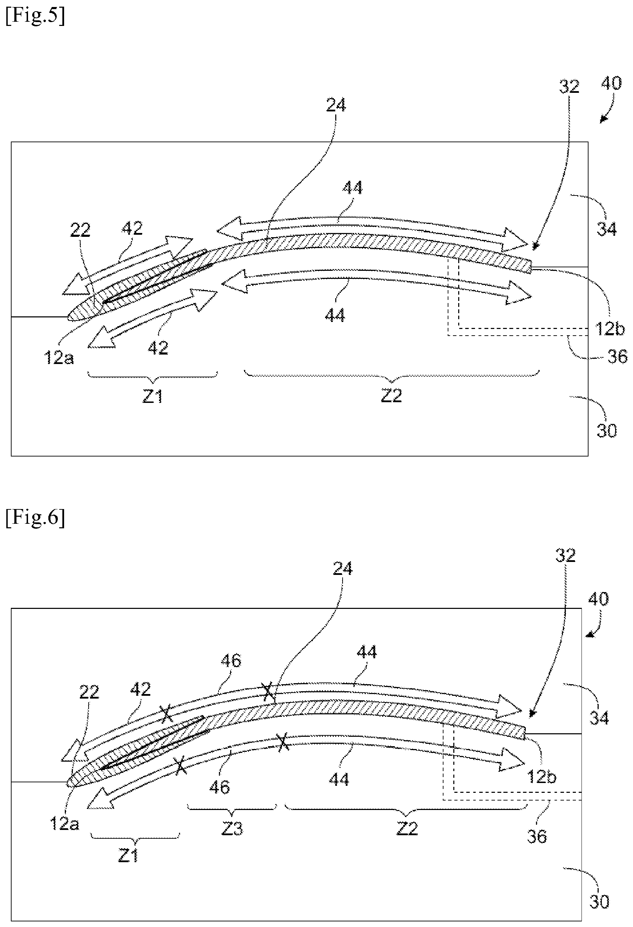

La figure 5 illustre de manière très schématique un premier mode de réalisation d'un outillage 40 selon l'invention. Cet outillage 40 comprend :
- un moule 30 et un contre-moule 34 qui définissent entre eux une empreinte 32 configurée pour recevoir une préforme 24 tissée de la pale, telle que celle décrite dans ce qui précède, l'empreinte 32 comportant une première partie Z1 configurée pour recevoir le bouclier 22 et le bord d'attaque 12a de la préforme, et une seconde partie Z2 configurée pour recevoir au moins une partie du reste de la préforme 24,
- au moins un port 36 d'injection de résine dans l'empreinte 32 de l'outillage 40 afin d'imprégner ladite préforme 24, et
- des éléments 42, 44 de gestion de la température qui sont de préférence intégrés dans le moule 30 et le contre-moule 34.

Selon l'invention, les éléments 42, 44 de gestion de la température comprennent des premiers éléments de gestion 42 qui sont agencés au niveau de la première partie Z1 de l'empreinte 32, et des seconds éléments de gestion 44 qui sont agencés au niveau de la seconde partie Z2 de l'empreinte 32 et qui sont indépendants des premiers éléments de gestion 42.

Comme on le voit dans la figure, les éléments de gestion 42, 44 sont avantageusement répartis dans le moule 30 et le contre-moule 34.

Dans l'exemple représenté, les seconds éléments de gestion 44 sont des éléments de chauffage qui sont configurés pour chauffer l'outillage 40 jusqu'à une température prédéterminée, notée T1. T1 est par exemple supérieure ou égale à 160°C, et de préférence supérieure ou égale à 180°C.

Les premiers éléments de gestion 42 peuvent être des éléments de chauffage qui sont configurés pour chauffer l'outillage 40 jusqu'à la température T1, lors d'une étape d'un procédé de fabrication, et jusqu'à une autre température prédéterminée, notée T2 qui est inférieure à T1, lors d'une autre étape du procédé de fabrication. T2 est par exemple comprise entre 80 et 140°C, et de préférence entre 100 et 130°C.

En variante, ces premiers éléments de gestion 44 pourraient être des éléments de refroidissement et chauffage qui sont configurés pour chauffer l'outillage jusqu'à la température T1, lors d'une étape d'un procédé de fabrication, et pour refroidir l'outillage jusqu'à la température T2, lors d'une autre étape du procédé de fabrication. Dans encore une autre variante, seuls les premiers éléments 42 sont intégrés dans l'outillage et sont des éléments de refroidissement. L'outillage 40 est destiné à être mis sous presse chauffante, en étuve ou autoclave pour réaliser son chauffage. Lorsque les premiers éléments 42 sont activés par circulation d'un fluide caloporteur, la zone Z1 est refroidie pour ne pas dépasser la température T2 alors que la zone est chauffée à la température T1. Lorsque les premiers éléments 42 ne sont pas activés, les zones Z1 et Z1 sont chauffées à la température T1.

Ces organes de gestion peuvent être du type électrique ou fluidique. Il peut par exemple s'agir de résistances électriques chauffantes, ou de systèmes à induction (les deux pouvant chauffer uniquement), ou de conduits de fluide caloporteur (qui peut chauffer ou refroidir).

Dans la variante de réalisation de la figure 6, en plus des parties Z1 et Z2, l'empreinte 32 comporte une partie intermédiaire Z3, située entre les première et seconde parties Z1, Z2. Les éléments de gestion de la température sont configurés pour créer une zone de transition progressive de la température au niveau de cette partie intermédiaire Z3. Cette partie intermédiaire Z3 peut être équipée de ses propres éléments 46 de gestion de la température.

En référence à la figure 2, la présente invention concerne également un procédé de fabrication d'une aube dans lequel l'étape c) comprend :
c1) une première sous étape d'injection de la résine pendant laquelle la seconde partie Z2 de l'empreinte 32 est chauffée jusqu'à la température T1, et la première partie Z1 de l'empreinte 32 est gérée pour ne pas dépasser la température T2, et
c2) une seconde sous étape de cuisson pendant laquelle les première et seconde parties Z1, Z2 sont chauffées à la température T1.

Lors de la sous étape c1), la première partie Z1 de l'empreinte 32 peut être chauffée jusqu'à la température prédéterminée T2. En variante, la première partie Z1 de l'empreinte 32 est refroidie pour ne pas dépasser la température prédéterminée T2.

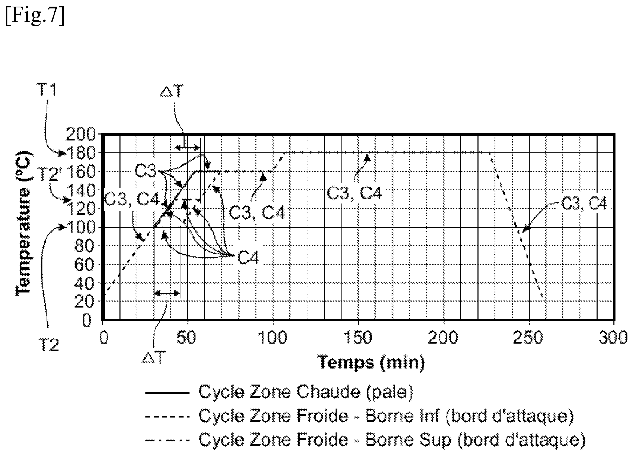

La figure 7 est un graphe représentant deux cycles de chauffage différents de l'outillage 40 conforme à l'invention.

Le cycle de chauffage C3 est le cycle de chauffage réalisé par les seconds organes de gestion 44, et représente donc le cycle de chauffage de la partie Z2 de l'empreinte 32 ne comportant pas le bouclier 22 et la colle 26. En comparant ce cycle de chauffage C3 au graphe de la figure 4, on constate que ce cycle correspond au cycle de chauffage C1 idéal pour l'injection de la résine.

Le cycle de chauffage C4 est le cycle de chauffage réalisé par les premiers organes de gestion 42, et représente donc le cycle de chauffage de la partie Z1 de l'empreinte 32 comportant le bouclier 22 et la colle 26. Ces cycles C3, C4 se superposent sauf en ce qui concerne le moment ou l'intervalle de temps ΔT d'injection et de diffusion de la résine.

Lors de cette sous étape c1) la première partie Z1 de l'empreinte est chauffée et/ou refroidie à la température T2. Cette température peut varier et elle est de 100°C dans l'exemple représenté pour le cycle C4, et 130°C (température T2') pour une variante de ce cycle C4' représentée en traits pointillés.

Le procédé selon l'invention permet de conserver la colle la plus froide possible pour éviter son fluage lors de l'injection de la résine, tout en chauffant suffisamment le reste de l'empreinte pour que la résine soit suffisamment liquide pour optimiser sa diffusion. Ces deux contraintes étant contraires, l'invention assure un compromis en créant des zones de gestion de température différentes dans l'outillage, ce qui permet de rajouter des degrés de liberté dans la définition du cycle de chauffage et donc d'en faciliter la mise au point.

## Revendications

1. Outillage (40) pour la fabrication d'une aube (10) en matériau composite pour une turbomachine, en particulier d'aéronef, cette aube (10) comportant une pale (12) comportant un intrados (14) et un extrados (16) qui s'étendent depuis un bord d'attaque (12a) jusqu'à un bord de fuite (12b) de la pale, l'aube comportant également un pied (16) et un bord supérieur (12c) opposé à son pied (16), l'aube comportant en outre au moins un bouclier métallique (22) s'étendant le long d'au moins un desdits bords (12a, 12b, 12c) de la pale (12), l'outillage (40) comprenant :
- un moule (30) et un contre-moule (34) qui définissent entre eux une empreinte (32) configurée pour recevoir une préforme tissée de la pale (12), l'empreinte (32) comportant une première partie (Z1) configurée pour recevoir le bouclier (22) et le ou les bords (12a, 12b, 12c) de la préforme destiné(s) à recevoir ce bouclier (22), et une seconde partie (Z2) configurée pour recevoir au moins une partie du reste de la préforme,
- au moins un port (36) d'injection de résine dans l'empreinte (32) afin d'imprégner ladite préforme, et
- des éléments (42, 44, 46) de gestion de la température de l'empreinte (32),
**caractérisé en ce que** les éléments (42, 44, 46) de gestion de la température comprennent des premiers éléments (42) de gestion de la température de la première partie (Z1) de l'empreinte (32), et des seconds éléments (44) de gestion de la température de la seconde partie (Z2) de l'empreinte (32) qui sont indépendants des premiers éléments (42) de gestion de la température de façon à ce que les premiers et seconds éléments de gestion (42, 44) puissent chauffer les première et seconde parties (Z1, Z2) de l'empreinte (32) à des températures différentes pendant au moins une étape d'un procédé de fabrication de l'aube (10).

2. Outillage (40) selon la revendication 1, dans lequel les seconds éléments (44) de gestion de la température sont des éléments de chauffage qui sont configurés pour chauffer l'outillage (40) jusqu'à une température prédéterminée, notée T1.

3. Outillage (40) selon la revendication 1 ou 2, dans lequel les premiers éléments (42) de gestion de la température sont des éléments de chauffage qui sont configurés pour chauffer l'outillage (40) jusqu'à une température prédéterminée, notée T1, lors d'une étape d'un procédé de fabrication, et jusqu'à une autre température prédéterminée, notée T2 et inférieure à T1, lors d'une autre étape du procédé de fabrication.

4. Outillage (40) selon la revendication 1 ou 2, dans lequel les premiers éléments (42) de gestion de la température sont des éléments de refroidissement et chauffage qui sont configurés pour chauffer l'outillage (40) jusqu'à une température prédéterminée, notée T1, lors d'une étape d'un procédé de fabrication, et pour refroidir l'outillage (40) jusqu'à une température prédéterminée, notée T2 et inférieure à T1, lors d'une autre étape du procédé de fabrication.

5. Outillage (40) selon l'une des revendications précédentes, dans lequel l'empreinte (32) comporte une partie intermédiaire (Z3), située entre les première et seconde parties (Z1, Z2), les éléments (42, 44, 46) de gestion de la température étant configurés pour créer une zone de transition progressive de la température au niveau de cette partie intermédiaire (Z3).

6. Outillage (40) selon l'une des revendications précédentes, dans lequel les éléments (42, 44, 46) de gestion de la température sont du type à résistance chauffante, à induction ou à circulation d'un fluide caloporteur.

7. Outillage (40) selon l'une des revendications précédentes, dans lequel les éléments (42, 44, 46) de gestion de la température sont répartis dans le moule (30) et le contre-moule (34).

8. Outillage (40) selon l'une des revendications précédentes, dans lequel les éléments (42, 44, 46) de gestion de la température sont intégrés dans le moule (30) et le contre-moule (34).

9. Procédé de fabrication d'une aube (10) en matériau composite pour une turbomachine, en particulier d'aéronef, cette aube comportant une pale (12) comportant un intrados (14) et un extrados (16) qui s'étendent depuis un bord d'attaque (12a) jusqu'à un bord de fuite (12b) de la pale, l'aube comportant également un pied (16) et un bord supérieur (12c) opposé à son pied (16), l'aube comportant en outre au moins un bouclier métallique (22) s'étendant le long d'au moins un desdits bords (12a, 12b, 12c) de la pale (12), le procédé utilisant un outillage (40) selon l'une des revendications précédentes et comprenant les étapes consistant à :
a) disposer un bouclier (22) et une préforme (24) réalisée par tissage de fibres dans l'empreinte de l'outillage (40), une colle (26) polymérisable étant intercalée entre le bouclier (22) et le ou les bords (12a, 12b, 12c) de la préforme destiné(s) à recevoir le bouclier (22), le bouclier (22) et le ou les bords de la préforme étant positionnés dans la première partie (Z1) de l'empreinte (32), et le reste de la préforme étant positionné dans la seconde partie (Z2) de l'empreinte,
b) fermer l'outillage (40), et
c) gérer la température de l'outillage (40) et injecter de la résine polymérisable dans l'empreinte (32) de l'outillage afin qu'elle imprègne la préforme de façon à former la pale (12) après solidification,
**caractérisé en ce que** l'étape c) comprend :
c1) une première sous étape d'injection de la résine pendant laquelle la seconde partie (Z2) de l'empreinte (32) est chauffée jusqu'à une température prédéterminée, notée T1, et la première partie (Z1) de l'empreinte (32) est gérée pour ne pas dépasser une température prédéterminée, notée T2 qui est inférieure à T1, et
c2) une seconde sous étape de cuisson pendant laquelle les première et seconde parties (Z1, Z2) sont chauffées à la température T1.

10. Procédé selon la revendication 9, dans lequel, à la sous étape c1), la première partie (Z1) de l'empreinte (32) est chauffée jusqu'à la température prédéterminée T2.

11. Procédé selon la revendication 9, dans lequel, à la sous étape c1), la première partie (Z1) de l'empreinte (32) est refroidie pour ne pas dépasser la température prédéterminée T2.

12. Procédé selon l'une des revendications 9 à 11, dans lequel la température T1 est supérieure ou égale à 160°C, et de préférence supérieure ou égale à 180°C, et la température T2 est comprise entre 80 et 140°C, et de préférence entre 100 et 130°C.

13. Procédé selon l'une des revendications 9 à 12, dans lequel le tissage de la préforme est réalisé en deux dimensions ou en trois dimensions.

## Patentansprüche

1. Werkzeug zur Herstellung einer Schaufel (10) aus Verbundmaterial für ein Turbotriebwerk, insbesondere eines Luftfahrzeugs, wobei diese Schaufel (10) ein Blatt (12) umfasst, das eine Druckseite (14) und eine Saugseite (16) umfasst, die sich ausgehend von einer Vorderkante (12a) bis zu einer Hinterkante (12b) des Blatts erstrecken, wobei die Schaufel ebenfalls einen Fuß (16) und eine obere Kante (12c), die ihrem Fuß (16) gegenüberliegt, umfasst, wobei die Schaufel weiter ein metallisches Schutzschild (22) umfasst, das sich entlang mindestens einer der Kanten (12a, 12b, 12c) des Blatts (12) erstreckt, wobei das Werkzeug (40) Folgendes umfasst:
- eine Form (30) und eine Gegenform (34), die untereinander einen Hohlraum (32) definieren, der ausgebildet ist, um eine gewebte Vorform des Blatts (12) aufzunehmen, wobei der Hohlraum (32) einen ersten Teil (Z1) umfasst, der ausgebildet ist, um das Schutzschild (22) und die Kante oder die Kanten (12a, 12b, 12c) der Vorform aufzunehmen, die dazu vorgesehen ist (sind), dieses Schutzschild (22) aufzunehmen, und einen zweiten Teil (Z2), der ausgebildet ist, um mindestens einen Teil des Restes der Vorform aufzunehmen,
- mindestens eine Öffnung (36) zur Injektion von Harz in den Hohlraum (32), um die Vorform zu imprägnieren, und
- Elemente (42, 44, 46) zur Verwaltung der Temperatur des Hohlraums (32), **dadurch gekennzeichnet, dass** die Elemente (42, 44, 46) zur Verwaltung der Temperatur erste Elemente (42) zur Verwaltung der Temperatur des ersten Teils (Z1) des Hohlraums (32) und zweite Elemente (44) zur Verwaltung der Temperatur des zweiten Teils (Z2) des Hohlraums (32) umfassen, die unabhängig von den ersten Elementen (42) zur Verwaltung der Temperatur sind, sodass die ersten und die zweiten Verwaltungselemente (42, 44) den ersten und den zweiten Teil (Z1, Z2) des Hohlraums (32) während mindestens eines Schritts eines Herstellungsverfahrens der Schaufel (10) auf unterschiedliche Temperaturen erhitzen können.

2. Werkzeug (40) nach Anspruch 1, wobei die zweiten Elemente (44) zur Verwaltung der Temperatur Heizelemente sind, die ausgebildet sind, um das Werkzeug (40) bis zu einer vorbestimmten Temperatur, als T1 bezeichnet, zu erhitzen.

3. Werkzeug (40) nach Anspruch 1 oder 2, wobei die ersten Elemente (42) zur Verwaltung der Temperatur Heizelemente sind, die ausgebildet sind, um das Werkzeug (40) bei einem Schritt eines Herstellungsverfahrens bis zu einer vorbestimmten Temperatur, als T1 bezeichnet, und bei einem anderen Schritt des Herstellungsverfahrens bis zu einer anderen vorbestimmten Temperatur, als T2 bezeichnet und niedriger als T1, zu erhitzen.

4. Werkzeug (40) nach Anspruch 1 oder 2, wobei die ersten Elemente (42) zur Verwaltung der Temperatur Kühl- und Heizelemente sind, die ausgebildet sind, um das Werkzeug (40) bei einem Schritt eines Herstellungsverfahrens bis zu einer vorbestimmten Temperatur, als T1 bezeichnet, zu erhitzen und um das Werkzeug (40) bei einem anderen Schritt des Herstellungsverfahrens bis zu einer vorbestimmten Temperatur, als T2 bezeichnet und niedriger als T1, abzukühlen.

5. Werkzeug (40) nach einem der vorstehenden Ansprüche, wobei der Hohlraum (32) ein Zwischenteil (Z3) umfasst, das sich zwischen dem ersten und dem zweiten Teil (Z1, Z2) befindet, wobei die Elemente (42, 44, 46) zur Verwaltung der Temperatur ausgebildet sind, um an diesem Zwischenteil (Z3) einen Bereich eines progressiven Übergangs der Temperatur zu schaffen.

6. Werkzeug (40) nach einem der vorstehenden Ansprüche, wobei die Elemente (42, 44, 46) zur Verwaltung der Temperatur von Heizwiderstandstyp, Induktionstyp oder vom Typ der Zirkulation eines wärmeübertragenden Fluids sind.

7. Werkzeug (40) nach einem der vorstehenden Ansprüche, wobei die Elemente (42, 44, 46) zur Verwaltung der Temperatur in der Form (30) und in der Gegenform (34) verteilt sind.

8. Werkzeug (40) nach einem der vorstehenden Ansprüche, wobei die Elemente (42, 44, 46) zur Verwaltung der Temperatur in der Form (30) und in der Gegenform (34) integriert sind.

9. Verfahren zur Herstellung einer Schaufel (10) aus Verbundmaterial für ein Turbotriebwerk, insbesondere eines Luftfahrzeugs, wobei diese Schaufel ein Blatt (12) umfasst, das eine Druckseite (14) und eine Saugseite (16) umfasst, die sich ausgehend von einer Vorderkante (12a) bis zu einer Hinterkante (12b) des Blatts erstrecken, wobei die Schaufel ebenfalls einen Fuß (16) und eine obere Kante (12c), die ihrem Fuß (16) gegenüberliegt, umfasst, wobei die Schaufel weiter ein metallisches Schutzschild (22) umfasst, das sich entlang mindestens einer der Kanten (12a, 12b, 12c) des Blatts (12) erstreckt, wobei das Verfahren ein Werkzeug (40) nach einem der vorstehenden Ansprüche verwendet und die Schritte umfasst, die aus Folgendem bestehen:
a) Anordnen eines Schutzschilds (22) und einer Vorform (24), die durch Weben von Fasern im Hohlraum des Werkzeugs (40) ausgeführt ist, eines polymerisierbaren Klebstoffs (26), der zwischen dem Schutzschild (22) und der Kante oder den Kanten (12a, 12b, 12c) der Vorform eingefügt wird, die dazu vorgesehen ist (sind), das Schutzschild (22) aufzunehmen, wobei das Schutzschild (22) und die Kante oder die Kanten der Vorform im ersten Teil (Z1) des Hohlraums (32) platziert werden und der Rest der Vorform im zweiten Teil (Z) des Hohlraums platziert wird,
b) Verschließen des Werkzeugs (40), und
c) Verwalten der Temperatur des Werkzeugs (40) und Einspritzen des polymerisierbaren Harzes in den Hohlraum (32) des Werkzeugs, damit es die Vorform so imprägniert, dass das Blatt (12) nach Verfestigung gebildet wird,
**dadurch gekennzeichnet, dass** der Schritt c) umfasst:
c1) einen ersten Teilschritt der Injektion des Harzes, bei dem der zweite Teil (Z2) des Hohlraums (32) bis zu einer vorbestimmten Temperatur, als T1 bezeichnet, erhitzt wird und der erste Teil (Z1) des Hohlraums (32) verwaltet wird, um eine vorbestimmte Temperatur, als T2 bezeichnet, die niedriger ist als T1, nicht zu überschreiten, und
c2) einen zweiten Teilschritt des Brennens, bei dem der erste und der zweite Teil (Z1, Z2) auf die Temperatur T1 erhitzt werden.

10. Verfahren nach Anspruch 9, wobei im Teilschritt c1) der erste Teil (Z1) des Hohlraums (32) bis zur vorbestimmten Temperatur T2 erhitzt wird.

11. Verfahren nach Anspruch 9, wobei im Teilschritt c1) der erste Teil (Z1) des Hohlraums (32) abgekühlt wird, um die vorbestimmte Temperatur T2 nicht zu überschreiten.

12. Verfahren nach einem der Ansprüche 9 bis 11, wobei die Temperatur T1 größer oder gleich 160 °C und vorzugsweise größer oder gleich 180 °C ist, und die Temperatur T2 zwischen 80 und 140 °C und vorzugsweise zwischen 100 und 130 °C beträgt.

13. Verfahren nach einem der Ansprüche 9 bis 12, wobei das Weben der Vorform in zwei Dimensionen oder in drei Dimensionen ausgeführt wird.

## Claims

1. A tooling (40) for manufacturing a vane (10) made of composite material for a turbomachine, in particular of an aircraft, said vane (10) comprising a blade (12) comprising a pressure side (14) and a suction side (16) which extend from a leading edge (12a) to a trailing edge (12b) of the blade, the vane also comprising a root (16) and an upper edge (12c) opposite its root (16), the vane further comprising at least one metal shield (22) extending along at least one of said edges (12a, 12b, 12c) of the blade (12), the tooling (40) comprising:
- a mold (30) and a counter-mold (34) which define between them a cavity (32) configured to receive a woven preform of the blade (12), the cavity (32) comprising a first portion (Z1) configured to receive the shield (22) and the edge or edges (12a, 12b, 12c) of the preform intended to receive this shield (22), and a second portion (Z2) configured to receive at least part of the remainder of the preform,
- at least one port (36) for injecting resin into the cavity (32) in order to impregnate said preform, and
- elements (42, 44, 46) for managing the temperature of the cavity (32),
**characterized in that** the temperature management elements (42, 44, 46) comprise first elements (42) for managing the temperature of the first portion (42) (Z1) of the cavity (32), and second elements (44) for managing the temperature of the second portion (Z2) of the cavity (32) which are independent of the first temperature management elements (42) so that the first and second management elements (42, 44) can heat the first and second portions (Z1, Z2) of the cavity (32) to different temperatures during at least one step of a method for manufacturing the vane (10).

2. The tooling (40) according to claim 1, wherein the second temperature management elements (44) are heating elements which are configured to heat the tooling (40) to a predetermined temperature, noted T1.

3. The tooling (40) according to claim 1 or 2, wherein the first temperature management elements (42) are heating elements which are configured to heat the tooling (40) to a predetermined temperature, noted T1, during a step of a manufacturing method, and to another predetermined temperature, noted T2 and lower than T1, during another step of the manufacturing method.

4. The tooling (40) according to claim 1 or 2, wherein the first temperature management elements (42) are cooling and heating elements which are configured to heat the tooling (40) to a predetermined temperature, noted T1, during a step of a manufacturing method, and to cool the tooling (40) to a predetermined temperature, noted T2 and lower than T1, during another step of the manufacturing method.

5. The tooling (40) according to one of the preceding claims, wherein the cavity (32) comprises an intermediate portion (Z3), located between the first and second portions (Z1, Z2), the temperature management elements (42, 44, 46) being configured to create a zone of gradual temperature transition at this intermediate portion (Z3).

6. The tooling (40) according to one of the preceding claims, wherein the temperature management elements (42, 44, 46) are of the resistance heating, induction or heat transfer fluid circulation type.

7. The tooling (40) according to one of the preceding claims, wherein the temperature management elements (42, 44, 46) are distributed in the mold (30) and the counter-mold (34).

8. The tooling (40) according to one of the preceding claims, wherein the temperature management elements (42, 44, 46) are integrated in the mold (30) and the counter-mold (34).

9. A method of manufacturing a composite material vane (10) for a turbomachine, in particular of an aircraft, said vane comprising a blade (12) comprising a pressure side (14) and a suction side (16) which extend from a leading edge (12a) to a trailing edge (12b) of the blade, the vane also comprising a root (16) and an upper edge (12c) opposite its root (16), the vane further comprising at least one metal shield (22) extending along at least one of said edges (12a, 12b, 12c) of the blade (12), the method using tooling (40) according to one of the preceding claims and comprising the steps of:
a) arranging a shield (22) and a preform (24) made by weaving fibers in the cavity of the tooling (40), a polymerizable adhesive (26) being interposed between the shield (22) and the edge or edges (12a, 12b, 12c) of the preform intended to receive the shield (22), the shield (22) and the edge or edges of the preform being positioned in the first portion (Z1) of the cavity (32), and the remainder of the preform being positioned in the second portion (Z2) of the cavity,
b) closing the tooling (40), and
c) managing the temperature of the tooling (40) and injecting polymerizable resin into the cavity (32) of the tooling so that it impregnates the preform so as to form the blade (12) after solidification,
**characterized in that** step c) comprises:
c1) a first resin injection sub-step during which the second portion (Z2) of the cavity (32) is heated to a predetermined temperature, noted T1, and the first portion (Z1) of the cavity (32) is managed so as not to exceed a predetermined temperature, noted T2, which is lower than T1, and
c2) a second curing sub-step during which the first and second portions (Z1, Z2) are heated to temperature T1.

10. The method according to claim 9, wherein, in sub-step c1), the first portion (Z1) of the cavity (32) is heated to the predetermined temperature T2.

11. The method according to claim 9, wherein, in sub-step c1), the first portion (Z1) of the cavity (32) is cooled so as not to exceed the predetermined temperature T2.

12. The method according to one of claims 9 to 11, wherein the temperature T1 is greater than or equal to 160°C, and preferably greater than or equal to 180°C, and the temperature T2 is between 80 and 140°C, and preferably between 100 and 130°C.

13. The method according to one of claims 9 to 12, wherein the weaving of the preform is carried out in two dimensions or in three dimensions.
